# EUROPÄISCHE PATENTSCHRIFT

(11) **EP 1 829 931 B1**
(45) Veröffentlichungstag und Bekanntmachung des Hinweises auf die Patenterteilung: **16.09.2009**
(21) Anmeldenummer: 07102850.0
(22) Anmeldetag: 22.02.2007
(51) Int. Cl.: C08L 83/04, C07F 7/08, C09D 183/04

(54) **Vernetzbare Siliconzusammensetzungen**
Crosslinkable silicone compositions
Compositions de silicone réticulables

(30) Priorität: 02.03.2006 DE 102006009745
(43) Veröffentlichungstag der Anmeldung: 05.09.2007
(73) Patentinhaber: Wacker Chemie AG, 81737 München (DE)
(72) Erfinder: Geisberger, Gilbert, 84503, Altötting (DE); Lautenschlager, Hans, 84533, Haiming (DE)
(74) Vertreter: Fritz, Helmut

(56) Entgegenhaltungen:
- EP-A1- 0 651 019
- EP-A1- 0 707 028
- EP-A1- 0 773 261
- EP-A1- 1 247 811
- EP-A1- 1 589 056
- DE-A1- 19 723 669

## Beschreibung

Die Erfindung betrifft vernetzbare Zusammensetzungen (V) enthaltend lineare Alkenylgruppen aufweisende Organopolysiloxane (A), Diorganosiloxy-Einheiten und Si-H Gruppen aufweisende lineare Organopolysiloxane (B), die erhältlich sind durch ein Cohydrolyseverfahren, und die Anlagerung von Si-H Gruppen an aliphatische Kohlenstoff-Kohlenstoff-Doppelbindung fördernde Katalysatoren (C).

Ein Trend in der Etiketten herstellenden Industrie ist die Verwendung schnell vernetzender Silicontrennbeschichtungssysteme. Für die Geschwindigkeit der Hydrosilylierungsreaktion ist neben Polymertyp, Temperatur, Katalysatortyp und -konzentration der Vernetzer von entscheidender Bedeutung. Üblicherweise werden in Trennbeschichtungssystemen Organohydrogenpolysiloxane eingesetzt, wie beschrieben in z.B US 4,347,346 A.

Die Herstellung der Organohydrogenpolysiloxane erfolgt generell über eine sauer katalysierte Äquilibrierung. Typische Verfahren sind in EP 797612 A beschrieben.

EP 851000 A beschreibt verzweigte Organohydrogenpolysiloxane als Bestandteil vernetzender Systeme. Die Herstellung der Organohydrogenpolysiloxane erfolgt durch sauer katalysierte Äquilibrierung.

In WO 03/029375 werden Mischungen von teilweise verzweigten Organohydrogenpolysiloxanen als Vernetzer in Silicontrennbeschichtungsmitteln erwähnt. Die Herstellung dieser Organohydrogenpolysiloxane erfolgt durch Reaktion cyclischer Organohydrogenpolysiloxane mit Trimethylsilyl endblockiertem Polydimethylsiloxan und einem Säurekatalysator.

EP 896041 A beschreibt die Trennkrafterhöhung in Silicontrennbeschichtungssystemen durch teilweise unverträgliche Organohydrogenpolysiloxane. Die Herstellung dieser Organohydrogenpolysiloxane erfolgt durch Reaktion von phenylfunktionellem Polydimethylsiloxan mit Trimethylsilyl endblockiertem Organohydrogenpolysiloxane und einem Säurekatalysator.

Dabei kann das erhaltene Organohydrogenpolysiloxan durch ungenügende Equilibrierung oder durch Reste des verwendeten saueren Katalysators in seiner Reaktionsgeschwindigkeit in Hydrosilylierungsreaktionen beeinträchtigt sein.

Die Bedeutung von Verunreinigungen durch den Katalysator auf die Hydrosilylierungsgeschwindigkeit wurde bei der Herstellung von alkenylfunktionellen Polysiloxanen bereits erkannt.

In WO 2005/005544 werden Papierbeschichtungsmittel verwendet, die auf Basis eines Phospazene Basenkatalysators hergestellt werden. Aufgrund dieses Katalysators können verfahrensbedingte Verunreinigungen soweit reduziert werden, daß die darauf basierende Papierbeschichtungsmittelzusammensetzung mit sehr geringen Platinmengen von 2-40 Gewichtsprozent ausgehärtet werden kann.

Gegenstand der Erfindung ist ein Verfahren zur Herstellung von Beschichtungen durch Auftragen von vernetzbaren Zusammensetzungen (V) auf die zu beschichtenden Oberflächen und anschließende Vernetzung der Zusammensetzungen, wobei die vernetzbaren Zusammensetzungen (V) enthalten:
(A) Alkenylgruppen aufweisende Organopolysiloxane (A) der allgemeinen Formel 1 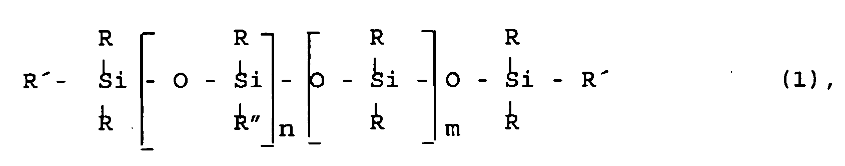 in der
   - **R**: einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen,
   - **R"**: einen einwertigen, mindestens eine aliphatische Kohlenstoff-Kohlenstoff-Doppelbindung enthaltenden, SiC-gebundenen, gegebenenfalls substituierten Kohlenwasserstoffrest mit 1 bis 18 Kohlenstoffatomen,
   - **R'**: einen Rest **R** oder **R",**
   - **m**: einen ganzzahligen Wert von 40 bis 1000,
   - **n**: einen ganzzahligen Wert von 0 bis 10 und
   - **m + n**: einen ganzzahligen Wert von 40 bis 1000 bedeuten,
(B) Diorganosiloxy-Einheiten und Si-H Gruppen aufweisende lineare Organopolysiloxane (B), die erhältlich sind durch ein Cohydrolyseverfahren, bei dem Diorganodichlorsilane und Monochlorsilane und gegebenenfalls Dichlorsilane, wobei mindestens die Monochlorsilane oder Dichlorsilane Si-H Gruppen enthalten, mit Wasser hydrolysiert werden, und
(C) die Anlagerung von Si-H Gruppen an aliphatische Kohlenstoff-Kohlenstoff-Doppelbindung fördernde Katalysatoren (C).

Die vernetzbaren Zusammensetzungen (V) zeigen eine deutliche Erhöhung der Reaktivität gegenüber solchen vernetzbaren Zusammensetzungen, die durch Äquilibrierung hergestellte Organohydrogenpolysiloxane (B) verwenden. Die vernetzbaren Zusammensetzungen (V) weisen deshalb höhere Aushärtungsgeschwindigkeiten auf als vernetzbare Zusammensetzungen, deren Organohydrogenpolysiloxane durch Äquilibrierung oder Polymerisation hergestellt wurden. Insbesondere zeigen die Zusammensetzungen (V) hohe Vernetzungsgeschwindigkeit bei niedriger Aushärtungstemperatur.

Es wurde gefunden, dass Organohydrogenpolysiloxane, die durch Äquilibrierung oder Polymerisation hergestellt wurden, Verunreinigungen enthalten, welche deren Reaktivität in vernetzbaren Zusammensetzungen herabsetzen. Organohydrogenpolysiloxane (B), weisen keine die Vernetzung hemmenden Verunreinigungen auf.

Beispiele für Reste **R** sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste **R** sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest **R** um einen einwertigen Alkylrest mit 1 bis 6 Kohlenstoffatomen, wobei der Methylrest besonders bevorzugt ist.

Beispiele für Reste **R"** sind Reste mit terminaler aliphatischer Kohlenstoff-Kohlenstoff-Doppelbindung, vorzugsweise mit 2 bis 10 Kohlenstoffatomen, wie der Vinyl-, 5-Hexenyl-, Cyclohexenyl- , 1-Propenyl-, Allyl-, 3-Butenyl- und 4-Pentenylrest.

Vorzugsweise weist **m** einen Wert von 50 bis 200, besonders bevorzugt 100 bis 160 auf. Vorzugsweise weist **n** einen Wert von 1 bis 6, insbesondere 2 bis 5 auf.

Die Organopolysiloxane (A) besitzen vorzugsweise eine durchschnittliche Viskosität von 100 bis 10000 mPa.s bei 25°C, bevorzugt 200 bis 1000 mPa.s bei 25°C.

Die Organopolysiloxane (A) werden nach üblichen Verfahren hergestellt, beispielsweise durch Hydrolyse von Allylmethyldichlorsilan und anschließender Äquilibrierung des entstandenen Hydrolysats mit cyclischem Polydimethylsiloxan und einem vinylendständigen Dimethylsiloxan mit einem geeigneten Katalysator.

Vorzugsweise werden die Diorganosiloxy-Einheiten und Si-H Gruppen aufweisenden linearen Organopolysiloxane (B) in einem Verfahren hergestellt, bei dem
in einem ersten Schritt Diorganodichlorsilane und Monochlorsilane und gegebenenfalls Dichlorsilane, wobei mindestens die Monochlorsilane oder Dichlorsilane Si-H Gruppen enthalten, mit höchstens 0,5 Mol Wasser je Mol hydrolysierbaren Chlors zu einem Teilhydrolysat (T) und gasförmigem Chlorwasserstoff umgesetzt werden und
in einem zweiten Schritt das Teilhydrolysat (T) zur Entfernung der noch vorhandenen SiCl-Gruppen mit Wasser unter Bildung von Salzsäure behandelt wird, wobei ein die Organopolysiloxane (B) enthaltendes Hydrolysat (H) anfällt.

Das hydrolysierbare Chlor liegt in Form von SiCl-Gruppen vor. Vorzugsweise werden im ersten Schritt mindestens 0,3 mol Wasser je Mol hydrolysierbaren Chlors eingesetzt.

Die Diorganosiloxy-Einheiten und Si-H Gruppen aufweisenden linearen Organopolysiloxane (B) weisen vorzugsweise die allgemeine Formel 1

R*₃SiO(SiR*₂O)ₓ(SiR¹₂O)_{y}SiR*₃ (2),

auf, in der
**R*** Wasserstoff oder einen gegebenenfalls mit Halogen- oder Cyanoresten substituierten Kohlenwasserstoffrest mit 1 bis 18 Kohlenstoffatomen,
**R¹** einen gegebenenfalls mit Halogen- oder Cyanoresten substituierten Kohlenwasserstoffrest mit 1 bis 18 Kohlenstoffatomen,
**x** einen ganzzahligen Wert von 0 bis 1000 und
**y** einen ganzzahligen Wert von 1 bis 1000 bedeuten,
mit der Massgabe, dass mindestens ein Rest **R*** Wasserstoff bedeutet.

Die im ersten Schritt eingesetzten Diorganodichlorsilane weisen vorzugsweise die allgemeine Formel 3

R¹₂SiCl₂ (3),

auf, in der **R¹** die vorstehenden Bedeutungen aufweist.

Die im ersten Schritt eingesetzten Monochlorsilane weisen vorzugsweise die allgemeine Formel 4

R*₃SiCl (4),

auf, in der **R*** die vorstehenden Bedeutungen aufweist.

Die im ersten Schritt eingesetzten Dichlorsilane weisen vorzugsweise die allgemeine Formel 5

R*₂SiCl₂ (5),

auf, in der **R*** die vorstehenden Bedeutungen aufweist.

Beispiele für die Kohlenwasserstoffreste **R*** und **R¹** sind die für **R** angegebenen Reste.

Bevorzugt handelt es sich bei den Resten **R*** und **R¹** um einen Phenylrest oder linearen Alkylrest, insbesondere mit 1 bis 10, besonders 1 bis 6 Kohlenstoffatomen. Besonders bevorzugte Kohlenwasserstoffreste **R*** und **R¹** sind n-Propyl-, Ethyl- und insbesondere Methylrest.

Vorzugsweise bedeutet **x** Werte von höchstens 200, insbesondere höchstens 50. Vorzugsweise bedeutet **y** Werte von höchstens 500, insbesondere höchstens 250.

Bevorzugte im ersten Schritt eingesetzte Gemische sind (Methyl=Me):
Me₃SiCl/Me₂SiCl₂/MeSiHCl₂
Me₃SiCl/PropylMeSiCl₂/MeSiHCl₂
Me₃SiCl/Me₂SiCl₂/PhenylMeSiCl₂/MeSiHCl₂
Me₂SiHCl/Me₂SiCl₂
Me₂SiHCl/Me₂SiCl₂/MeSiHCl₂

Vorzugsweise weisen die Organopolysiloxane (B) eine Viskosität von 1 bis 1200 mPas, insbesondere 5 bis 150 mPas bei 25 °C auf.

Der erste Schritt des Verfahrens zur Herstellung von Organopolysiloxanen (B) wird bevorzugt in Anwesenheit eines in Wasser unlöslichen organischen Lösungsmittels mit einer Dichte von höchstens 0,9 kg/l (L) durchgeführt. Unter einem in Wasser unlöslichen organischen Lösungsmittel (L) sollen im Rahmen dieser Erfindung Lösungsmittel verstanden werden, bei denen die Löslichkeit bei 25°C unter 1 g Lösungsmittel/100 g Wasser liegt, wie z. B. Toluol, Xylol, Tetrachlorkohlenstoff, n-Oktan. Bevorzugt ist Toluol.

Das im ersten Schritt gebildete Teilhydrolysat (T) besteht aus teilweise Cl- und gegebenenfalls OH-endständigen Organopolysiloxanen und cyclischen Siloxanen. Der Gehalt an noch vorhandenen SiCl-Gruppen im Teilhydrolysat (T) beträgt vorzugsweise 0,5 bis 5 Gew.-%, insbesondere 1,0 bis 2 Gew.-%.

Der erste Schritt des Verfahrens wird vorzugsweise bei einer Temperatur von 0 bis 80°C, insbesondere 10 bis 30°C, und einem Druck von 900 bis 1600 hPa durchgeführt.

Das im ersten Schritt anfallende Chlorwasserstoffgas kann direkt in anderen Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Im zweiten Schritt wird der Chlorgehalt des Teilhydrolysats (T) mit Wasser vollständig zur Reaktion gebracht. Die dabei entstehende Salzsäure hat vorzugsweise einen HCl-Gehalt von 3 bis 20 Gew.-%, insbesondere 5 bis 10 Gew.-%.

In einer besonderen Ausführungsform des Verfahrens wird im zweiten Schritt gebildete Salzsäure im ersten Schritt als Wasserlieferant eingesetzt. Vorzugsweise werden mindestens 90 %, insbesondere mindestens 95 % der im zweiten Schritt gebildeten Salzsäure im ersten Schritt eingesetzt.

In einer besonders bevorzugten Ausführungsform des Verfahrens wird im zweiten Schritt höchstens so viel Wasser eingesetzt, dass das Wasser der entstehenden Salzsäure im ersten Schritt vollständig umgesetzt wird.

Die Kettenlängen und Viskositäten der hergestellten Organopolysiloxane (B) werden über das Gewichtsverhältnis der eingesetzten Chlorsilan-Gemische gesteuert.

Der zweite Schritt des Verfahrens wird vorzugsweise bei einer Temperatur von 0 bis 100°C, insbesondere 10 bis 60°C, und dem Druck der umgebenden Atmosphäre, also bei 900 bis 1100 hPa, durchgeführt.

In einer bevorzugten Ausführungsform wird das nach dem zweiten Schritt anfallende Hydrolysat (H) mit einem Umlagerungskatalysator versetzt, um den Anteil an schwerer flüchtigen, im wesentlichen linearen Organopolysiloxanen zu erhöhen. Bevorzugt handelt es sich bei diesen Katalysatoren um stark saure Ionenaustauscher, besonders bevorzugt auf Basis Polystyrol und mit Sulfonsäuregruppen funktionalisiert.

Bevorzugt wird der Katalysator in einen Rohrreaktor und insbesondere als lose Schüttung gefüllt, er kann aber auch als gepackte Füllung vorliegen.

In einer weiteren bevorzugten Ausführungsform wird das nach dem zweiten Schritt anfallende Hydrolysat (H) in Organopolysiloxane (B) und leichtflüchtiges Organopolysiloxane enthaltendes Gemisch (G) aufgetrennt. Das Gemisch (G) wird vorzugsweise in den ersten Schritt und/oder zweiten Schritt zurückgeführt oder ganz oder teilweise zu schwerer flüchtigen, im wesentlichen linearen Organopolysiloxanen umgelagert.

Die Abtrennung des Gemisches (G) erfolgt bevorzugt durch Destillation, wobei diese besonders bevorzugt in zwei Stufen in Gemische (G1) und (G2) durchgeführt wird. Bei den Gemischen (G), (G1), (G2) handelt es sich überwiegend um kurzkettige lineare und cyclische Organohydrogensiloxane und gegebenenfalls um das Lösungsmittel (L). In einer ersten Destillationsstufe wird vorrangig das gegebenenfalls eingesetzte Lösungsmittel (L) abgetrennt. Dieses kann im ersten oder zweiten Verfahrensschritt wieder zugeführt werden. Die zweite Destillationsstufe dient vorrangig der Abtrennung eines Organohydrogensiloxan-Gemisches, welches vorzugsweise in die Destillation zurückgeführt wird. Das Abtrennen der Destillate kann zur Gewinnung von cyclischen Organohydrogenpolysiloxanen dienen.

Die erste Destillationsstufe wird vorzugsweise bei einer Temperatur von 50 bis 150°C, insbesondere 60 bis 120°C, und einem Absolutdruck von 50 bis 1100 hPa durchgeführt.

Die zweite Destillationsstufe wird vorzugsweise bei einer Temperatur von 80 bis 200°C, insbesondere 120 bis 160°C, und einem Absolutdruck von 1 bis 30 hPa, durchgeführt.

Vorzugsweise werden die Gemische (G), (G1), (G2) in den ersten Schritt zurückgeführt.

Besonders bevorzugt wird mit den Gemischen (G), (G1), (G2), gegebenenfalls nach Abtrennung des Lösungsmittels (L) eine Umlagerung in Anwesenheit eines Umlagerungskatalysators durchgeführt. Bevorzugt handelt es sich bei den Katalysatoren um die vorstehend beschriebenen beim Hydrolysat (H) einsetzbaren Katalysatoren.

Während der Kontaktzeit werden zum überwiegenden Teil, bevorzugt zu 80 bis 95 Gew.-% des flüchtigen Organohydrogenpolysiloxans, zu schwer flüchtigem, im wesentlichen linearen Organohydrogenpolysiloxan umgelagert. Die Gemische (G), (G1), (G2) enthalten bevorzugt bis zu 60 Gew.-% Lösungsmittel (L), insbesondere ein Gemisch aus den Gemischen (G1) und (G2), besonders bevorzugt jedoch 15 bis 25 % Lösungsmittel (L).

Die Gemische (G), (G1), (G2) können in einem Reaktionsgefäss mit Katalysator kontaktiert werden. Als Reaktionsgefäss können beliebige Reaktionsgefässe, wie Rührkessel und insbesondere Rohrreaktor eingesetzt werden. Die Gemische (G), (G1), (G2) können entweder von oben über die Katalysatorschüttung gegeben oder sie durchströmen mittels Pumpe von unten nach oben die Katalysatorsäule, wobei die Anströmung von unten mittels Pumpe bevorzugt ist.

Entscheidend für den Grad der Umlagerung sind Katalysatormenge, Verweilzeit und Temperatur. Kontaktzeiten von einer Minute bis hundertzwanzig Minuten sind bevorzugt und zwei bis 30 Minuten sind besonders bevorzugt. Die Umlagerung wird bei Temperaturen von bevorzugt -30°C bis +200°C, besonders bevorzugt von 0 bis 30°C, und einem bevorzugten Druck der umgebenden Atmosphäre, also etwa 900 bis 1100 hPa, durchgeführt.

Das Verfahren kann absatzweise, halbkontinuierlich oder vollkontinuierlich durchgeführt werden, wobei bevorzugt die vollkontinuierliche Fahrweise der zwei Schritte und gegebenenfalls der Abtrennung, Bearbeitung und Zuführung der Gemische (G), (G1), (G2) in einem Anlagenverbund zum Einsatz kommt.

Die Organopolysiloxane (B) besitzen vorzugsweise einen Gehalt an Si-gebundenen Wasserstoffatomen von 0,1 bis 5 Gew.-%, insbesondere von 0,6 bis 1,6 Gew.-%.

Die Organopolysiloxane (B) besitzen vorzugsweise eine durchschnittliche Viskosität von 10 bis 1 000 mPa.s, insbesondere von 50 bis 200 mPa.s bei 25°C.

Organosiliciumverbindung (B) wird vorzugsweise in Mengen von 0,5 bis 3,5, bevorzugt 1,0 bis 3,0 Grammatom, Si-gebundenen Wasserstoff je Mol Kohlenwasserstoffrest mit terminaler aliphatischer Kohlenstoff-Kohlenstoff-Doppelbindung in dem Organopolysiloxan (A) eingesetzt.

Der Anteil von Organopolysiloxan (B) in den vernetzbaren Zusammensetzungen (V) beträgt vorzugsweise höchstens 15%.

Als die Anlagerung von Si-gebundenem Wasserstoff an aliphatische Doppelbindungen fördernde Katalysatoren (C) können bei den vernetzbaren Zusammensetzungen (V) die gleichen Katalysatoren eingesetzt werden, die auch bisher zur Förderung der Anlagerung von Si-gebundenem Wasserstoff an aliphatische Doppelbindung eingesetzt werden konnten. Als Katalysatoren (C) werden vorzugsweise Metalle aus der Gruppe der Platinmetalle oder Verbindungen oder Komplexe aus der Gruppe der Platinmetalle eingesetzt. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetra-methyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Die Katalysatoren (C) werden vorzugsweise in Mengen von 10 bis 1000 Gew.-ppm (Gewichtsteilen je Million Gewichtsteilen), bevorzugt 20 bis 200 Gew.-ppm, insbesondere 50 bis 100 Gew.-ppm, jeweils berechnet als elementares Platinmetall und bezogen auf das Gesamtgewicht der Organosiliciumverbindungen (A) und (B), eingesetzt.

Die vernetzbaren Zusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC≡C-C(CH₃)(OH)-CH₂-CH₂-CH=C(CH₃)₂, käuflich erwerblich als Dehydrolinalool® bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Zusammensetzungen (V) mitverwendet werden können, sind Mittel zur Einstellung der Trennkraft, Anti Misting Additiv, organische Lösungsmittel, Haftvermittler und Pigmente.

Beispiele für Mittel zur Einstellung der Trennkraft in den Zusammensetzungen (V) sind Siliconharze, aufgebaut aus Einheiten der allgemeinen Formel 6

R³R⁴₂SiO_{1/2} (6)

und SiO₂, sogenannte MQ-Harze, wobei
- **R³**: ein Wasserstoffatom oder einen einwertigen SiC-gebundenen, gegebenenfalls substituierten Kohlenwasserstoffrest mit 1 bis 18 Kohlenstoffatomen und
- **R⁴**: einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen bedeuten,
und die Einheiten der allgemeinen Formel (6) gleich oder verschieden sein können.
Das Verhältnis von Einheiten der allgemeinen Formel (IV) zu Einheiten der Formel SiO₂ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele und bevorzugte Beispiele für **R³** sind für **R¹** aufgeführte Kohlenwasserstoffreste. Beispiele und bevorzugte Beispiele für **R⁴** sind für **R** aufgeführte Kohlenwasserstoffreste.

Beispiele für geeignete organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon, Methylisobutylketon(MIBK) und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (A), (B), (C) und gegebenenfalls (D) ist zwar nicht entscheidend, für die Praxis hat es sich jedoch bewährt, den Katalysator (C) dem Gemisch der anderen Bestandteile zuletzt zuzusetzen.

Die Vernetzung der Zusammensetzungen (V) erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die Zusammensetzungen (V) können außer durch Erwärmen auch durch Bestrahlen mit Ultraviolettlicht oder durch Bestrahlen mit UV- und IR-Licht vernetzt werden. Als Ultra-violettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Die Zusammensetzungen (V) werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von Zusammensetzungen (V) auf die klebrige Stoffe abweisend zu machenden Oberflächen und anschließende Vernetzung der Zusammensetzungen (V).

Das Auftragen von den Zusammensetzungen (V) auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 µm, besonders bevorzugt 0,5 bis 2,0 µm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien, Polyesterfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei Papier kann es sich um minderwertige Papiersorten, wie saugfähige Papiere, ein-schliesslich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die Zusammensetzungen (V) eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien und -tüchern, für die Ausrüstung der Rückseiten von selbstklebenden Bändern oder selbstklebenden Folien oder der beschrifteten Seiten von selbstklebenden Etiketten. Die Zusammensetzungen (V) eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der Zusammensetzungen (V) ist die Ausrüstung von Trägern zum Übertragen von Haftklebeschichten beim sogenannten "Transfer-Verfahren".

Die Zusammensetzungen (V) eignen sich zur Herstellung der mit dem Trennpapier verbundenen Selbstklebematerialien sowohl nach dem off-line Verfahren als auch nach dem in-line Verfahren.

Beim off-line Verfahren wird die Zusammensetzung (V) auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Zusammensetzung (V) auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen.

Alle vorstehenden Symbole der vorstehenden Formeln weisen ihre Bedeutungen jeweils unabhängig voneinander auf.

In den folgenden Anwendungsbeispielen beziehen sich alle Angaben von Teilen und Prozentsätzen auf das Gewicht. Die Beispiele wurden bei einem Druck der umgebenden Atmosphäre, also etwa bei 1012 mbar, und bei Raumtemperatur, also etwa bei 21 °C, durchgeführt. Die Viskositäten wurden bei 25°C gemessen.

### Beispiele:

### Erfindungsgemäße Beispiele:

Organohydrogenpolysiloxan V1 wird analog dem in EP 1589056 A, Beispiel 1 beschriebenenen Verfahren hergestellt.

### Nicht erfindungsgemässe Vergleichsbeispiele:

Organohydrogenpolysiloxan V2, wird durch Äquilibrierung von trimethylendständigem und trimethylsilylendständigem Polydimethyldisiloxan unter saueren Katalysebedingungen mit Phosphornitrilchlorid analog dem in in EP 797612 B1, Beispiel 6 beschriebenenen Verfahren hergestellt.

Die Vernetzer V1 und V2 weisen jeweils eine Viskosität von 30 mPas und einen Wasserstoffgehalt von 1,15% auf und entsprechen der durchschnittlichen Formel Me₃Si(SiHMe)₁₀(SiMe₂)₃₀SiMe₃.

Der anwendungstechnische Vergleich der Papierbeschichtungssysteme erfolgt in einer Standardrezeptur aus 100
Gewichtsteilen DEHESIVE® 920, einem Divinyl-endgestopperten Polydimethylsiloxan der Viskosität 500 mPas mit einem Gehalt an 0,25 Gew.-% Ethinylhexanol als Inhibitor
2,9 Gewichtsteilen Vernetzer V
1,0 bzw. 0,7 Gewichtsteilen des Pt-Katalysator Wacker® OL mit einem Pt-Gehalt von 10 000 ppm .

Die Vernetzer V werden der Standardformulierung zugesetzt. Diese Mischungen werden zur Papierbeschichtung eingesetzt.

Als Substrat wird Papier der Fa. Ahlstrom mit der Bezeichnung Glassine® Larice Tipo 325, 62 g/m² verwendet. Die Beschichtung erfolgt auf der Pilotbeschichtungsanlage der Fa. Dixon mit einem 5-Walzen Auftragswerk bei verschiedenen Auftragsgeschwindigkeiten. Dabei wird die Auftragsrolle mit 95% der Papiergeschwindigkeit gefahren. Die Beschichtung wird im Trocknungsofen mit 3 m Länge bei 160°C ausgehärtet.

Als Maß für die Vernetzungsgeschwindigkeit dient der Prozentsatz an extrahierbaren Siliconanteilen in Abhängigkeit von der Verweilzeit.
Der Einfluß der Vernetzer auf die Aushärtung des Beschichtungssystems wird sofort mittels Migrationstest und Strichtest bestimmt und parallel mittels Extraktion unvernetzter Anteile in MIBK.
Der Einfluß der Vernetzer auf die Haftung des Beschichtungssystems zum Substrat wird mittels Rub-Off Test bestimmt.
Die Testmethoden sind in der Boschüre DEHESIVE® Testmethoden, Ausgabe 2001 der Wacker-Chemie AG beschrieben.

Die Ergebnisse sind in der Tabelle zusammenfasst. Dabei ist ersichtlich, daß mit dem Vernetzer V1 gegenüber Vernetzer V2 bei identischen Rezeptierung und Aushärtebedingungen niedrigere Extraktwerte erhalten werden. Extraktwerte dienen als Maß für den Vernetzungsgrad des Systems. Somit zeigen die niedrigeren Extraktwerte mit V1 die höhere Reaktionsgeschwindigkeit gegenüber V2 an.

| **Rezeptur** | **ppm PT** | **Maschinen geschwindigkeit(m/min)** | **Verweil zeit (s)** | **Migration** | **Strichtest** | **Ruboff** | **Si--Auftrag (g/m² )** | **Si-Extrakt (%)** |
|---|---|---|---|---|---|---|---|---|
| 100 Teile | | | | | | | | |
| DEHESIVE® 920 | | 45 | 4 | 1 | 1 | 1 | 1,70 | 3,2 |
| 2,9 Teile | | | | | | | | |
| Vernetzer V1 | **100** | 60 | 3 | 1 | 1 | 1 | 1,66 | 3,2 |
| 1,0 Teile | | | | | | | | |
| Katalysator | | 90 | 2 | 1 | 1 | 1 | 1,55 | 3,3 |
| | | 120 | 1,5 | 1 | 1 | 1 | 1,49 | 3,6 |
| 100 Teile | | | | | | | | |
| DEHESIVE® 920 | | 45 | 4 | 1 | 1 | 1 | 1,70 | 3,3 |
| 2,9 Teile | | | | | | | | |
| Vernetzer V1 | **70** | 60 | 3 | 1 | 1 | 1 | 1,52 | 3,7 |
| 0,7 Teile | | | | | | | | |
| Katalysator | | 90 | 2 | 1 | 1 | 1 | 1,58 | 3,8 |
| | | 120 | 1,5 | 1 | 1 | 1 | 1,48 | 4,5 |
| 100 Teile | | | | | | | | |
| DEHESIVE® 920 | | 45 | 4 | 1 | 1 | 1 | 1,68 | 3,3 |
| 2,9 Teile | | | | | | | | |
| Vernetzer V2* | **100** | 60 | 3 | 1 | 1 | 1 | 1,51 | 3,5 |
| 1,0 Teile | | | | | | | | |
| Katalysator | | 90 | 2 | 1 | 1 | 1 | 1,42 | 3,6 |
| | | 120 | 1,5 | 1 | 2 | 1 | 1,34 | 4,0 |
| 100 Teile | | | | | | | | |
| DEHESIVE® 920 | | 45 | 4 | 1 | 1 | 1 | 1,68 | 3,6 |
| 2,9 Teile | | | | | | | | |
| Vernetzer V2* | **70** | 60 | 3 | 1 | 1 | 1 | 1,57 | 3,6 |
| 0,7 Teile | | | | | | | | |
| Katalysator | | 90 | 2 | 1 | 2 | 1 | 1,4 | 4,4 |
| | | 120 | 1,5 | 1 | 2 | 1 | 1,41 | 5,3 |

| | | | | | | | | |
|---|---|---|---|---|---|---|---|---|
| * nicht erfindungsgemäss | | | | | | | | |

## Patentansprüche

1. Verfahren zur Herstellung von Beschichtungen durch Auftragen von vernetzbaren Zusammensetzungen (V) auf die zu beschichtenden Oberflächen und anschließende Vernetzung der Zusammensetzungen, wobei die vernetzbaren Zusammensetzungen (V) enthalten:
(A) Alkenylgruppen aufweisende Organopolysiloxane (A) der allgemeinen Formel 1 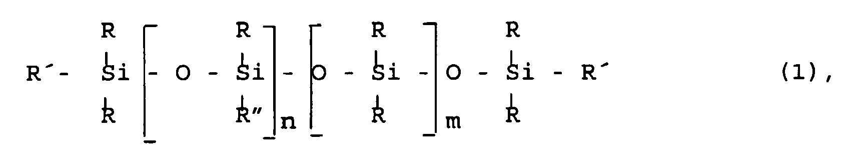 in der
**R** einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen,
**R"** einen einwertigen, mindestens eine aliphatische Kohlenstoff-Kohlenstoff-Doppelbindung enthaltenden, SiC-gebundenen, gegebenenfalls substituierten Kohlenwasserstoffrest mit 1 bis 18 Kohlenstoffatomen,
**R'** einen Rest **R** oder **R",**
**m** einen ganzzahligen Wert von 40 bis 1000,
**n** einen ganzzahligen Wert von 0 bis 10 und
**m + n** einen ganzzahligen Wert von 40 bis 1000 bedeuten,
(B) Diorganosiloxy-Einheiten und Si-H Gruppen aufweisende lineare Organopolysiloxane (B), die erhältlich sind durch ein Cohydrolyseverfahren, bei dem Diorganodichlorsilane und Monochlorsilane und gegebenenfalls Dichlorsilane, wobei mindestens die Monochlorsilane oder Dichlorsilane Si-H Gruppen enthalten, mit Wasser hydrolysiert werden, und
(C) die Anlagerung von Si-H Gruppen an aliphatische Kohlenstoff-Kohlenstoff-Doppelbindung fördernde Katalysatoren (C).

2. Verfahren nach Anspruch 1, bei denen die Diorganosiloxy-Einheiten und Si-H Gruppen aufweisenden linearen Organopolysiloxane (B) die allgemeine Formel 2
R*₃SiO(SiR*₂O)ₓ(SiR¹₂O)_{y}SiR*₃ (2),
aufweisen , in der
**R*** Wasserstoff oder einen gegebenenfalls mit Halogen- oder Cyanoresten substituierten Kohlenwasserstoffrest mit 1 bis 18 Kohlenstoffatomen,
**R¹** einen gegebenenfalls mit Halogen- oder Cyanoresten substituierten Kohlenwasserstoffrest mit 1 bis 18 Kohlenstoffatomen,
**x** einen ganzzahligen Wert von 0 bis 1000 und
**y** einen ganzzahligen Wert von 1 bis 1000 bedeuten,
mit der Massgabe, dass mindestens ein Rest R* Wasserstoff bedeutet.

3. Verfahren nach Anspruch 1 oder 2, bei denen die Organopolysiloxane (B) eine Viskosität 5 bis 150 mPas bei 25 °C aufweisen.

4. Verfahren nach Anspruch 1 bis 3, bei denen die Organopolysiloxane (A) eine durchschnittliche Viskosität von 100 bis 10000 mPa.s bei 25°C, besitzen.

5. Verfahren nach Anspruch 1 bis 4, bei denen die Reste **R"** Reste mit terminaler aliphatischer Kohlenstoff-Kohlenstoff-Doppelbindung mit 2 bis 10 Kohlenstoffatomen sind.

## Claims

1. Process for the production of coatings by application of crosslinkable compositions (V) to the surfaces to be coated and subsequent crosslinking of the compositions, the crosslinkable compositions (V) containing:
(A) organopolysiloxanes (A) having alkenyl groups and of the general formula 1 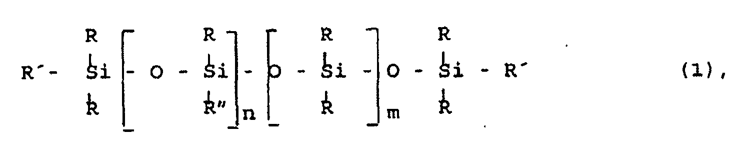 in which
**R** is a monovalent, SiC-bonded, optionally substituted hydrocarbon radical free of aliphatic carbon-carbon double bonds and having 1 to 18 carbon atoms,
**R"** is a monovalent, SiC-bonded, optionally substituted hydrocarbon radical containing at least one aliphatic carbon-carbon double bond and having 1 to 18 carbon atoms,
**R'** is a radical **R** or **R",**
**m** has an integral value from 40 to 1000,
**n** has an integral value from 0 to 10 and
**m + n** has an integral value from 40 to 1000,
(B) linear organopolysiloxanes (B) which have diorganosilyloxy units and Si-H groups and are obtainable by a cohydrolysis process in which diorganodichlorosilanes and monochlorosilanes and optionally dichlorosilanes, at least the monochlorosilanes or dichlorosilanes containing Si-H groups, are hydrolyzed with water, and
(C) catalysts (C) promoting the addition of Si-H groups at an aliphatic carbon-carbon double bond.

2. Process according to Claim 1, in which the linear organopolysiloxanes (B) having diorganosilyloxy units and Si-H groups have the general formula 2
R*₃SiO(SiR*₂O)ₓ(SiR¹₂O)_{y}SiR*₃ (2)
in which
**R*** is hydrogen or a hydrocarbon radical optionally substituted by halogen or cyano radicals and having 1 to 18 carbon atoms,
**R¹** is a hydrocarbon radical optionally substituted by halogen or cyano radicals and having 1 to 18 carbon atoms,
**x** has an integral value from 0 to 1000 and
**y** has an integral value from 1 to 1000,
with the proviso that at least one radical **R*** is hydrogen.

3. Process according to Claim 1 or 2, in which the organopolysiloxanes (B) have a viscosity of from 5 to 150 mPa.s at 25°C.

4. Process according to Claims 1 to 3, in which the organopolysiloxanes (A) have an average viscosity of from 100 to 10 000 mPa.s at 25°C.

5. Process according to Claims 1 to 4, in which the radicals **R"** are radicals having a terminal aliphatic carbon-carbon double bond with 2 to 10 carbon atoms.

## Revendications

1. Procédé pour la production de revêtements par application de compositions réticulables (V) sur les surfaces à revêtir et réticulation subséquente des compositions, les compositions réticulables (V) contenant :
(A) des organopolysiloxanes (A) comportant des groupes alcényle, de formule générale 1 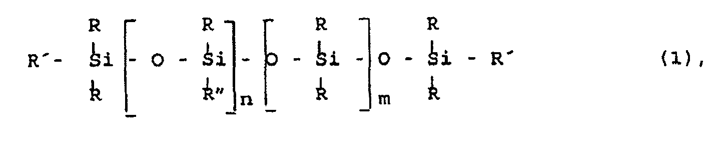 dans laquelle
**R** représente un radical hydrocarboné monovalent lié à SiC, éventuellement substitué, ayant de 1 à 18 atomes de carbone, exempt de doubles liaisons carbone-carbone aliphatiques,
**R"** représente un radical hydrocarboné monovalent lié à SiC, éventuellement substitué, ayant de 1 à 18 atomes de carbone, comportant au moins une double liaison carbone-carbone aliphatique,
**R'** représente un radical **R** ou **R",**
**m** représente un nombre entier valant de 40 à 1 000,
**n** représente un nombre entier valant de 0 à 10 et
la somme m + n représente un nombre entier valant de 40 à 1 000,
(B) des organopolysiloxanes (B) linéaires comportant des motifs diorganosiloxy et des groupes Si-H, qui peuvent être obtenus par un procédé de co-hydrolyse, dans lequel on soumet à une hydrolyse avec de l'eau des diorganodichlorosilanes et des monochlorosilanes et éventuellement des dichlorosilanes, au moins les monochlorosilanes ou les dichlorosilanes contenant des groupes Si-H, et
(C) des catalyseurs (C) facilitant la fixation par addition de groupes Si-H sur une double liaison carbone-carbone aliphatique.

2. Procédé selon la revendication 1, dans lequel les organopolysiloxanes (B) linéaires comportant des motifs diorganosiloxy et des groupes Si-H correspondent à la formule générale 2
R*₃SiO(SiR*₂O)ₓ(SiR¹₂O)_{y}SiR*₃ (2)
dans laquelle
**R*** représente un atome d'hydrogène ou un radical hydrocarboné ayant de 1 à 18 atomes de carbone, éventuellement substitué par des radicaux halogéno ou cyano,
**R¹** représente un radical hydrocarboné ayant de 1 à 18 atomes de carbone, éventuellement substitué par des radicaux halogéno ou cyano,
**x** représente un nombre entier valant de 0 à 1 000 et
**y** représente un nombre entier valant de 1 à 1 000,
étant entendu qu'au moins un radical **R*** représente un atome d'hydrogène.

3. Procédé selon la revendication 1 ou 2, dans lequel les organopolysiloxanes (B) ont une viscosité de 5 à 150 mPa.s à 25 °C.

4. Procédé selon les revendications 1 à 3, dans lequel les organopolysiloxanes (A) ont une viscosité moyenne de 100 à 10 000 mPa.s à 25 °C.

5. Procédé selon les revendications 1 à 4, dans lequel les radicaux **R"** sont des radicaux à double liaison carbone-carbone aliphatique terminale, ayant de 2 à 10 atomes de carbone.
